# EUROPEAN PATENT SPECIFICATION

(11) **EP 3 421 839 B1**
(45) Date of publication and mention of the grant of the patent: **12.02.2020**
(21) Application number: 17756550.4
(22) Date of filing: 22.02.2017
(51) Int. Cl.: F16H 9/18, F16H 63/06, F16H 55/56

(54) **ELECTRONICALLY CONTROLLED V-BELT CONTINUOUSLY VARIABLE TRANSMISSION**
ELEKTRONISCH GESTEUERTES STUFENLOSES KEILRIEMENGETRIEBE
TRANSMISSION À VARIATION CONTINUE À COURROIE TRAPÉZOÏDALE À COMMANDE ÉLECTRONIQUE

(30) Priority: 23.02.2016 JP 2016032398
(43) Date of publication of application: 02.01.2019
(73) Proprietor: Honda Motor Co., Ltd., Tokyo 107-8556 (JP); Musashi Seimitsu Industry Co., Ltd., Aichi 441-8560 (JP)
(72) Inventor: YOSHIZAWA, Hiroyasu, Wako-shi Saitama 351-0193 (JP); KAKEMIZU, Kenichiro, Wako-shi Saitama 351-0193 (JP); MATSUURA, Kohei, Wako-shi Saitama 351-0193 (JP); MORITA, Go, Wako-shi Saitama 351-0193 (JP); YOSHIDA, Yoshihiro, Toyohashi-shi Aichi 441-8560 (JP); OKAMOTO, Teruhisa, Toyohashi-shi Aichi 441-8560 (JP)
(74) Representative: Kiwit, Benedikt
(86) International application number: PCT/JP2017/006652
(87) International publication number: WO 2017/146112

(56) References cited:
- JP-A- 2005 264 990
- JP-A- 2009 079 756
- JP-A- 2012 184 788
- JP-A- 2014 055 648
- JP-A- 2014 055 648
- JP-A- 2015 172 382
- JP-B2- 2 949 204

## Description

### TECHNICAL FIELD

The present invention relates to an electronically controlled V-belt continuously variable transmission.

### BACKGROUND ART

Patent Document 1 discloses a V-belt continuously variable transmission. The V-belt continuously variable transmission employs a centrifugal weight for driving a movable sheave. The centrifugal weight is sandwiched between a cam member and a weight retaining plate. The cam member is in contact with the centrifugal weight via a cam face that moves closer to a fixed sheave in moving away in the centrifugal direction from the axis of a drive shaft. A fastening member is joined to a boss of the movable sheave and retains the weight retaining plate on the boss of the movable sheave. When the drive shaft rotates, the centrifugal weight is moved so as to follow the cam face in the centrifugal direction by virtue of centrifugal force, thus moving the weight retaining plate in the axial direction. In this way, the movable sheave is moved away from the fixed sheave.

### RELATED ART DOCUMENTS

### PATENT DOCUMENTS

Patent Document 1: Japanese Patent Application Laid-open No. 2014-55648, disclosing all the features of the preamble of claim 1.

### SUMMARY OF THE INVENTION

### PROBLEMS TO BE SOLVED BY THE INVENTION

A shift mechanism is formed from a large number of components. The number of components is large. When the number of components is large, the mechanism tends to increase in size. An accumulation of small ideas for making the size small can enable a reduction in the overall size of the mechanism to be realized.

An object of the present invention is to provide an electronically controlled V-belt continuously variable transmission that enables the size to be made as small as possible.

### MEANS FOR SOLVING THE PROBLEMS

According to a first aspect of the present invention, there is provided an electronically controlled V-belt continuously variable transmission comprising a fixed sheave that is fixed to a drive shaft, a movable sheave that has a movable sheave boss for receiving the drive shaft and is supported on the drive shaft so as to be capable of moving in an axial direction of the drive shaft while facing the fixed sheave, a V-belt that is wound around between the fixed sheave and the movable sheave, a first shift mechanism that comprises a cam member having a cam face, that sandwiches a centrifugal weight between the cam face and a weight retaining plate disposed so as to oppose the cam member, and that drives the centrifugal weight by means of centrifugal force accompanying rotation of the drive shaft to thus move the movable sheave in the axial direction, a second shift mechanism that comprises a drive arm relatively rotatably and axially non-movably fitted onto the movable sheave boss via a rolling bearing and that transmits a driving force of an actuator linked to the drive arm to the movable sheave to thus move the movable sheave in the axial direction, and a fastening member that is disposed between the cam member and the weight retaining plate, is joined to the movable sheave boss, and retains the cam member or the weight retaining plate on the movable sheave boss, characterized in that the fastening member comprises, on an inner peripheral face thereof, a screw part that has a screw groove screwed onto the movable sheave boss and a press fitting part that has an oil seal member press fitted thereinto.

According to a second aspect of the present invention, in addition to the first aspect, the cam member has a housing recess part that houses at least partially the fastening member and the oil seal member.

According to a third aspect of the present invention, in addition to the first or second aspect, a clearance part is formed on the fastening member so as to correspond to the cam member.

According to a fourth aspect of the present invention, in addition to any one of the first to third aspects, a groove is formed in at least one of an inner peripheral face of the movable sheave boss and an outer peripheral face of a member, that is in contact with the inner peripheral face, over the entire periphery around the drive shaft.

According to a fifth aspect of the present invention, in addition to any one of the first to fourth aspects, the transmission comprises an O ring disposed between the fastening member and the movable sheave boss.

### EFFECTS OF THE INVENTION

In accordance with the first aspect, the oil seal member is press fitted into the fastening member instead of being press fitted into the movable sheave boss. The fastening member retains the oil seal member around the drive shaft in place of the movable sheave boss while retaining the cam member or the weight retaining plate on the movable sheave boss. Due to the oil seal member not being press fitted on the inside, the radial dimension of the movable sheave boss can be reduced. In this way, the size of the electronically controlled V-belt continuously variable transmission can be reduced as much as possible.

In accordance with the second aspect, even when the fastening member and the oil seal member are disposed between the cam member and the weight retaining plate, the cam member and the weight retaining plate can be disposed in proximity to each other. In this way, the electronically controlled V-belt continuously variable transmission can be reduced in size in the axial direction of the drive shaft, that is, the vehicle width direction.

In accordance with the third aspect, the clearance part enables interference between the fastening member and the cam member to be avoided. Therefore, regardless of the presence of the fastening member, the cam member and the weight retaining plate can be disposed in proximity to each other. In this way, the electronically controlled V-belt continuously variable transmission can be reduced in size in the axial direction of the drive shaft, that is, the vehicle width direction.

In accordance with the fourth aspect, since the groove is formed in the inner peripheral face of the movable sheave boss or the outer peripheral face of the member, which is in contact with the inner peripheral face, over the entire periphery around the drive shaft, grease can remain in the groove. Grease can spread over the entire periphery of the movable sheave boss.

In accordance with the fifth aspect, it is possible to prevent the leakage of grease remaining in the movable sheave boss.

### BRIEF DESCRIPTION OF DRAWINGS

[FIG. 1] FIG. 1 is a side view schematically showing a scooter type two-wheeled motor vehicle related to one embodiment of a saddle-ridden vehicle (first embodiment).
[FIG. 2] FIG. 2 is an enlarged horizontal sectional view of a power unit (first embodiment).
[FIG. 3] FIG. 3 is an enlarged plan view of part of FIG. 2 (first embodiment).

### EXPLANATION OF REFERENCE NUMERALS AND SYMBOLS

- 32: Drive shaft (crankshaft)
- 62: Case main body forming transmission case
- 64: Case cover forming transmission case
- 71: V-belt
- 73: Fixed sheave
- 74: Movable sheave
- 74a: Movable sheave boss
- 75a: First shift mechanism
- 75b: Second shift mechanism
- 87: Cam member
- 87a: Cam face
- 88: Member (sleeve)
- 92: Weight retaining plate
- 93: Centrifugal weight
- 102: Fastening member
- 103: Screw part
- 104: Press fitting part
- 105: Oil seal member
- 106: Housing recess part
- 107: Clearance part
- 109: Groove
- 110: O ring
- 111: Drive arm
- 112: Rolling bearing (ball bearing)
- 115: Actuator (electric motor)

### MODES FOR CARRYING OUT THE INVENTION

One embodiment of the present invention is explained below by reference to the attached drawings.

### FIRST EMBODIMENT

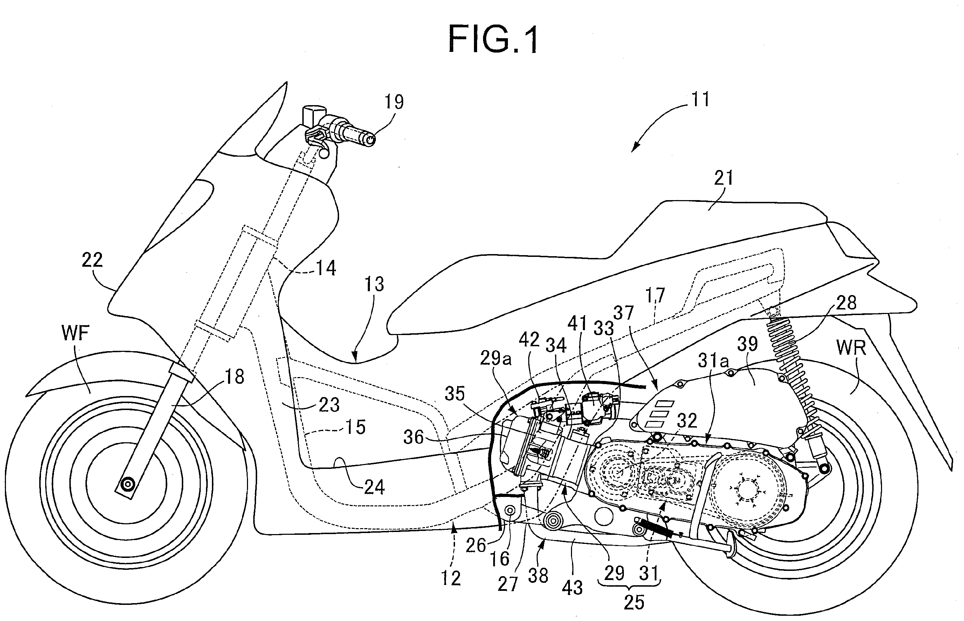

FIG. 1 schematically shows a scooter type two-wheeled motor vehicle related to one embodiment of a saddle-ridden vehicle. The two-wheeled motor vehicle 11 includes a vehicle body frame 12 and a vehicle body cover 13. The vehicle body frame 12 includes a head pipe 14 at the front end, a main frame 15 joined to the head pipe 14 via its front end, a cross pipe 16 joined to a rear part of the main frame 15 and extending in the vehicle width direction, and a pair of left and right rear frames 17 having front end parts connected to opposite end parts of the cross pipe 16 and extending in the vehicle fore-and-aft direction. A front fork 18 supporting a front wheel WF so that it can rotate around a horizontal axis and rod-shaped handlebars 19 are steerably supported on the head pipe 14.

The vehicle body cover 13 is fitted onto the vehicle body frame 12. An occupant seat 21 is mounted on the vehicle body cover 13 above the rear frame 17. The vehicle body cover 13 includes a front cover 22 that covers the head pipe 14 from the front, a leg shield 23 that is continuous from the front cover 22, and a step floor 24 that is continuous from the lower end of the leg shield 23 and is disposed above the main frame 15 between the occupant seat 21 and the front wheel WF.

A unit-swing type power unit 25 is disposed in a space beneath the rear frame 17. The power unit 25 is vertically swingably linked to a bracket 26 joined to the front end of the rear frame 17 via a link 27. A rear wheel WR is supported by the rear end of the power unit 25 so that it can rotate around a horizontal axis. A rear cushion unit 28 is disposed between the rear frame 17 and the power unit 25 at a position spaced from the link 27 and the bracket 26. The power unit 25 includes an air-cooled single-cylinder internal combustion engine 29, and a transmission device 31 that is connected to the internal combustion engine 29 and the rear wheel WR and transfers output from the internal combustion engine 29 to the rear wheel WR. A transmission case 31a of the transmission device 31 is joined to an engine main body 29a of the internal combustion engine 29.

The engine main body 29a of the internal combustion engine 29 includes a crankcase 33 that supports a crankshaft 32 so that it can rotate around a rotational axis, a cylinder block 34 that is joined to the crankcase 33, a cylinder head 35 that is joined to the cylinder block 34, and a head cover 36 that is joined to the cylinder head 35. An air intake device 37 and an exhaust device 38 are connected to the cylinder head 35. The air intake device 37 includes an air cleaner 39 that is supported on the transmission case 31a and a throttle body 41 that is disposed between the air cleaner 39 and the cylinder head 35. A fuel injection valve 42 is mounted on an upper side wall of the cylinder head 35. The exhaust device 38 includes an exhaust pipe 43 that extends rearward from a lower side wall of the cylinder head 35 while passing beneath the engine main body 29a, and an exhaust muffler (not illustrated) that is connected to the downstream end of the exhaust pipe 43 and is linked to the crankcase 33.

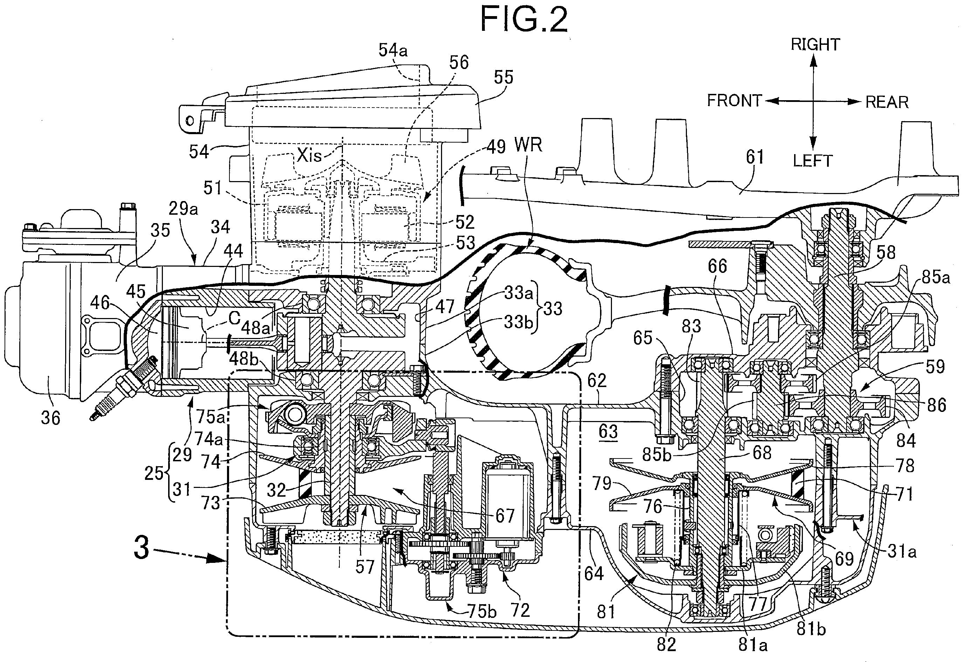

As shown in FIG. 2, a cylinder bore 44 is defined in the cylinder block 34. A piston 45 is slidably fitted into the cylinder bore 44 along a cylinder axis C. The cylinder axis C is inclined slightly upward to the front. The crankshaft 32 is linked to the piston 45. A rotational axis Xis of the crankshaft 32 is oriented in the vehicle width direction.

A combustion chamber 46 is defined in the cylinder head 35. The combustion chamber 46 is continuous from the cylinder bore 44. The piston 45 faces the cylinder head 35 and forms the combustion chamber 46 between itself and the cylinder head 35. An air-fuel mixture is introduced into the combustion chamber 46 via the air intake device 37. Exhaust gas within the combustion chamber 46 is discharged via the exhaust device 38.

The crankcase 33 is divided into a first case half body 33a and a second case half body 33b. The first case half body 33a and the second case half body 33b define in cooperation a crank chamber 47. A crank of the crankshaft 32 is housed in the crank chamber 47. The first case half body 33a has a bearing 48a that rotatably supports the crankshaft 32 whereas the second case half body 33b has a bearing 48b that rotatably supports the crankshaft 32.

A generator 49 is joined to the crankcase 33. The generator 49 includes a tubular rotor 51 that extends through the first case half body 33a of the crankcase 33 and is fixed to the crankshaft 32 protruding out of the first case half body 33a, and a stator 52 that is surrounded by the rotor 51 and is disposed around the crankshaft 32. The stator 52 is fixed to a support plate 53 fastened to the first case half body 33a. The generator 49 generates current in response to relative rotation of the rotor 51 and the stator 52.

A tubular generator cover 54 surrounding the generator 49 is joined to the first case half body 33a. An air inlet 54a is defined at an open end of the generator cover 54. A radiator 55 is disposed in the air inlet 54a. A cooling fan 56 is joined to an outer face of the rotor 51. The cooling fan 56 rotates in response to the rotation of the crankshaft 32, and cooling air flows toward the radiator 55.

The transmission device 31 is housed within the transmission case 31a and includes an electronically controlled V-belt continuously variable transmission (hereinafter called a 'transmission') 57 that steplessly changes the speed of rotational power transmitted from the crankshaft 32, and a reduction gear mechanism 59 that is housed within the transmission case 31a and reduces the speed of rotational power of the transmission 57 and transmits it to an axle 58 of the rear wheel WR. The rear wheel WR is disposed between the transmission case 31a and a support arm 61. The support arm 61 is continuous from the crankcase 33 and extends to the rear of the vehicle. The exhaust muffler described above is mounted on the support arm 61. The axle 58 of the rear wheel WR is doubly supported by the transmission case 31a and the support arm 61 so that it can rotate around its axis.

The transmission case 31a includes a case main body 62 that is continuous from the second case half body 33b of the crankcase 33, a case cover 64 that is fastened to the case main body 62 and defines a transmission chamber 63 between itself and the case main body 62, and a gear cover 66 that is fastened to the case main body 62 and defines a gear chamber 65 between itself and the case main body 62. The transmission 57 is housed in the transmission chamber 63. The reduction gear mechanism 59 is housed in the gear chamber 65. The case main body 62 and the case cover 64 in cooperation form a transmission case.

The transmission 57 includes a drive pulley 67 that is disposed within the transmission chamber 63 and is mounted on the crankshaft 32 as a drive shaft, and a driven pulley 69 that is disposed within the transmission chamber 63 and is mounted on a driven shaft 68 protruding from the transmission chamber 63 into the gear chamber 65. A V-belt 71 that is seamlessly continuous is wound around the drive pulley 67 and the driven pulley 69. As described later, due to operation of an actuator unit 72 the belt winding radius of the drive pulley 67 is electronically controlled so as to be variable. The belt winding radius of the driven pulley 69 changes in response to a change in the belt winding radius of the drive pulley 67.

The drive pulley 67 includes a fixed sheave 73 that is fixed to the crankshaft 32 and a movable sheave 74 that is supported on the crankshaft 32 so that it can move in the axial direction of the crankshaft 32 while facing the fixed sheave 73. The movable sheave 74 is disposed between the fixed sheave 73 and the second case half body 33b of the crankcase 33. The V-belt 71 is wound around between the fixed sheave 73 and the movable sheave 74. The movable sheave 74 has a movable sheave boss 74a that receives the crankshaft 32. The movable sheave boss 74a extends from a sheave body that receives the V-belt 71 toward the second case half body 33b of the crankcase 24. The transmission 57 includes a first shift mechanism 75a and a second shift mechanism 75b that includes the actuator unit 72. Axial movement of the movable sheave 74 is realized in response to operation of the first shift mechanism 75a and the second shift mechanism 75b, and the winding radius of the V-belt 71 is changed. Details of the first shift mechanism 75a and the second shift mechanism 75b are given later.

The driven pulley 69 includes an inner tube 76 that has a cylindrical shape coaxial with the driven shaft 68 and is coaxially fitted around the driven shaft 68, and an outer tube 77 that has a cylindrical shape coaxial with the driven shaft 68 and is coaxially fitted around the inner tube 76. The inner tube 76 is relatively rotatably supported on the driven shaft 68. The outer tube 77 is relatively rotatably and axially relatively displaceably supported on the inner tube 76. The fixed sheave 73 is coaxially fixed to the inner tube 76. The movable sheave 74 is coaxially fixed to the outer tube 77. The movable sheave 74 faces the fixed sheave 73, and the movable sheave 74 moves closer to the fixed sheave 73 or moves away from the fixed sheave 73 according to relative displacement in the axial direction between the outer tube 77 and the inner tube 76. The V-belt 71 is wound around between the fixed sheave 73 and the movable sheave 74.

A centrifugal clutch 81 is fitted around the driven shaft 68. The centrifugal clutch 81 includes a clutch plate 81a that is fixed to the inner tube 76. A helical spring 82 is disposed between the clutch plate 81a and the movable sheave 74. The helical spring 82 exhibits a resilient force that pushes the movable sheave 74 toward the fixed sheave 73. When the winding radius of the V-belt 71 increases for the drive pulley 67, in the driven pulley 69 the movable sheave 74 moves away from the fixed sheave 73 against the resilient force of the helical spring 82 and the winding radius of the V-belt 71 decreases.

The centrifugal clutch 81 includes an outer plate 81b fixed to the driven shaft 68. The outer plate 81b faces the clutch plate 81a. When the clutch plate 81a rotates, the outer plate 81b is joined to the clutch plate 81a by the action of centrifugal force. Rotation of the driven pulley 69 is thus transmitted to the driven shaft 68. When the engine rotational speed exceeds a set rotational speed, the centrifugal clutch 81 establishes a power transmission state.

The reduction gear mechanism 59 includes a drive gear 83 fixed to the driven shaft 68 protruding into the gear chamber 65, a final gear 84 fixed to the axle 58 of the rear wheel WR, and idle gears 85a and 85b disposed between the drive gear 83 and the final gear 84. The idle gears 85a and 85b are fixed to a common intermediate shaft 86. The drive gear 83 meshes with the idle gear 85a, and the final gear 84 meshes with the idle gear 85b. In this way, rotation of the driven shaft 68 is reduced in speed and transmitted to the axle 58 of the rear wheel WR.

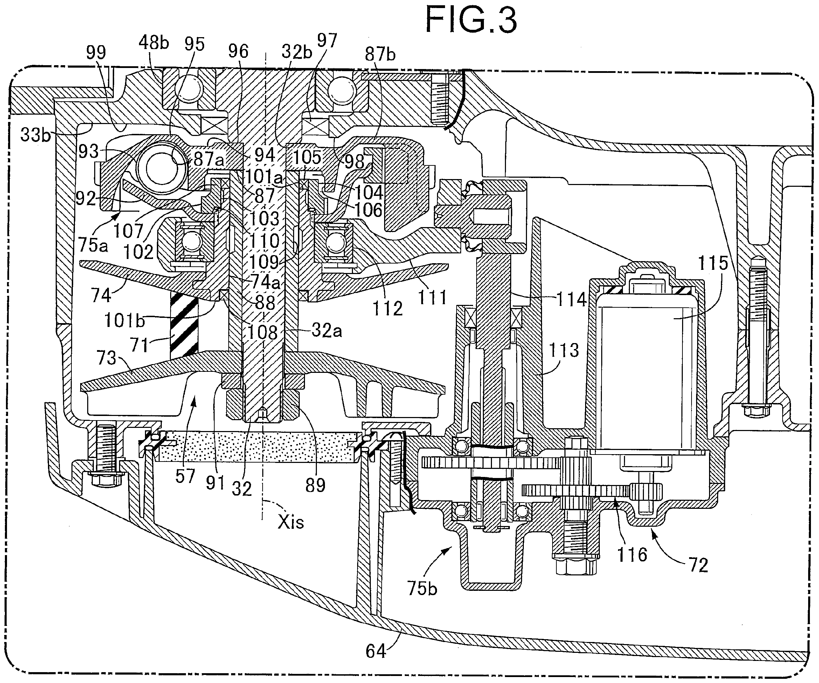

As shown in FIG. 3, the first shift mechanism 75a includes a cam member 87 disposed between the fixed sheave 73 and the second case half body 33b of the crankcase 33. The cam member 87 is fitted onto a small diameter portion 32a of the crankshaft 32 together with the fixed sheave 73 and a sleeve 88. A nut 89 is joined to the extremity of the small diameter portion 32a. In response to the nut 89 being tightened, the fixed sheave 73, the sleeve 88 and the cam member 87 are sandwiched between the nut 89 and a stepped face 32b of the small diameter portion 32a. When carrying out the sandwiching, a washer 91 may be disposed between the nut 89 and the fixed sheave 73. In this way, the fixed sheave 73 and the cam member 87 are axially relatively non-displaceably fixed on the crankshaft 32.

A weight retaining plate 92 is fitted onto the movable sheave boss 74a. The weight retaining plate 92 may be relatively non-displaceably fixed to the movable sheave 74. The weight retaining plate 92 faces a cam face 87a of the cam member 87. The weight retaining plate 92 is disposed further outside in the vehicle width direction than the cam member 87. A centrifugal weight 93 is sandwiched between the cam face 87a and the weight retaining plate 92. The cam face 87a moves closer to the fixed sheave 73 in moving away in the centrifugal direction from the rotational axis Xis of the crankshaft 32. Accompanying rotation of the crankshaft 32, a centrifugal force is generated in the centrifugal weight 93. The centrifugal weight 93 is displaced in the centrifugal direction by virtue of the centrifugal force. As the centrifugal weight 93 is displaced in the centrifugal direction while making rolling contact with the cam face 87a, the weight retaining plate 92 is driven toward the fixed sheave 73. In this way, the movable sheave 74 moves in the axial direction toward the fixed sheave 73 in response to rotation of the crankshaft 32. The weight retaining plate 92 may be disposed further inside in the vehicle width direction than the cam member 87.

The cam member 87 has an outer surface 87b on the reverse side of the cam face 87a. Formed on the outer surface 87b are an annular concave face 94 that is concave toward the outside in the vehicle width direction around the crankshaft 32, a bulge face 95 that is positioned on the radially outer side of the concave face 94 and bulges inward in the vehicle width direction, and an abutment face 96 that is positioned on the radially inner side of the concave face and abuts against the crankshaft 32 along the axial direction. The abutment face 96 is in intimate contact with the stepped face 32b of the small diameter portion 32a. The bulge face 95 is formed on the outer surface of the cam member 87 corresponding to the cam face 87a.

An oil seal member 97 is disposed between the cam member 87 and the bearing 48b of the second case half body 33b. The oil seal member 97 is fitted into a fitting part 98 formed on the second case half body 33b. The fitting part 98 supports the oil seal member 97 while protruding toward the concave face 94 of the cam member 87 positioned outside in the vehicle width direction. The oil seal member 97 prevents oil from leaking between the crankshaft 32 and the crankcase 33 while being exposed to the rotation of the crankshaft 32. The bulge face 95 is positioned further inside in the vehicle width direction than the concave face 94 and the abutment face 96.

The fitting part 98 is provided at a position where it opposes the concave face 94. A transmission case recess part 99 that is recessed inward in the vehicle width direction from the fitting part 98 is formed in the second case half body 33b in a region that is inside the bulge face 95 in the vehicle width direction and opposes the bulge face 95. The transmission case recess part 99 opposes the bulge face 95 of the cam member 87.

A fastening member 102 is joined to a first end 101a of the movable sheave boss 74a. The fastening member 102 is disposed between the cam member 87 and the weight retaining plate 92. The fastening member 102 is fastened toward a sheave main body of the movable sheave 74 and retains the weight retaining plate 92 on the movable sheave boss 74a. Furthermore, in a structure in which the weight retaining plate 92 is disposed further inside in the vehicle width direction than the cam member 87, the fastening member 102 is screwed toward the sheave main body of the movable sheave 74 to thus retain the cam member 87 on the movable sheave boss 74a side.

The fastening member 102 includes an annular screw part 103 having on an inner peripheral face a screw groove that is screwed onto the movable sheave boss 74a, and an annular press fitting part 104 disposed at a position that deviates from the movable sheave boss 74a in the axial direction while being continuous from the screw part 103. An oil seal member 105 is press fitted into the press fitting part 104 around the crankshaft 32. The oil seal member 105 is sandwiched between the sleeve 88 and an inner peripheral face of the press fitting part 104. The oil seal member 105 may be in intimate contact with an end face of the movable sheave boss 74a.

The cam member 87 has a housing recess part 106 housing at least partially the fastening member 102 and the oil seal member 105. The housing recess part 106 is disposed further radially inside than the cam face 87a. A clearance part 107 is formed on the fastening member 102 so as to correspond to the cam member 87. When forming the clearance part 107, a small diameter part is defined on the outer periphery of the fastening member 102.

An oil seal member 108 is disposed on a second end 101b (on the side opposite to the first end) of the movable sheave boss 74a between the crankshaft 32 and an inner peripheral face of the movable sheave boss 74a. Contact faces of the movable sheave boss 74a and the sleeve 88 are sealed by the oil seal members 105 and 108 at opposite ends (the first end 101a and the second end 101b). Grease introduced to the contact faces of the movable sheave boss 74a and the sleeve 88 is sealed by the oil seal members 105 and 108 at opposite ends.

A groove 109 is formed in an outer peripheral face of the sleeve 88 between the oil seal members 105 and 108 over the entire periphery around the crankshaft 32. Grease introduced to the contact faces of the movable sheave boss 74a and the sleeve 88 can remain in the groove 109. Grease can spread over the entire periphery of the movable sheave boss 74a via the groove 109.

An O ring 110 is disposed between the fastening member 102 and the movable sheave boss 74a. The O ring 110 establishes sealing between the fastening member 102 and the movable sheave boss 74a. It is possible to prevent the leakage of grease remaining on the movable sheave boss 74a.

The second shift mechanism 75b includes, in addition to the actuator unit 72, a drive arm 111 that is relatively rotatably and axially non-movably fitted onto the movable sheave boss 74a. When carrying out this fitting, a ball bearing 112, which is a rolling bearing, is fitted onto the movable sheave boss 74a. The ball bearing 112 is fitted, via an inner race, onto the movable sheave boss 74a. The drive arm 111 is fitted around an outer race of the ball bearing 112. In this way, relative rotation between the movable sheave 74 and the drive arm 111 is allowed, but relative movement in the axial direction is prevented.

The actuator unit 72 includes a unit casing 113 mounted on the case cover 64. An output rod 114 is supported on the unit casing 113. The output rod 114 extends in parallel with the rotational axis Xis of the crankshaft 32. The extremity of the output rod 114 is linked to the drive arm 111. The extremity of the drive arm 111 is fitted onto the output rod 114 in a direction orthogonal to the axis of the output rod 114. The output rod 114 is retained on the unit casing 113 so that the output rod 114 can be displaced freely in the axial direction with respect to the unit casing 113.

The actuator unit 72 includes an electric motor 115 as an actuator and a gear mechanism 116. The electric motor 115 and the gear mechanism 116 are housed within the unit casing 113. The gear mechanism 116 links the drive shaft of the electric motor 115 to the output rod 114. The rotational power of the electric motor 115 is transmitted from the gear mechanism 116 to rotational power around the output rod 114. The rotational power around the output rod 114 is converted to axial driving force of the output rod 114. In this way, axial movement of the movable sheave 74 is realized based on the driving force of the electric motor 115.

In the transmission 57, the fastening member 102 includes the screw part 103, which has on its inner peripheral face the screw groove screwed onto the movable sheave boss 74a, and the press fitting part 104, into which the oil seal member 105 is press fitted around the crankshaft 32. The oil seal member 105 is press fitted into the fastening member 102 instead of being press fitted into the movable sheave boss 74a. The fastening member 102 retains the oil seal member 105 around the crankshaft 32 (sleeve 88) instead of the movable sheave boss 74a while retaining the weight retaining plate 92 on the movable sheave boss 74a. Due to the oil seal member not being press fitted on the inside, the radial dimension of the movable sheave boss 74a can be reduced. In this way, the size of the transmission 57 can be reduced as much as possible.

The cam member 87 has the housing recess part 106 that houses at least partially the fastening member 102 and the oil seal member 105. Therefore, even when the fastening member 102 and the oil seal member 105 are disposed between the cam member 87 and the weight retaining plate 92, the cam member 87 and the weight retaining plate 92 can be disposed in proximity to each other. In this way, the transmission 57 can be reduced in size in the axial direction of the crankshaft 32, that is, the vehicle width direction.

In addition, the clearance part 107 is formed on the fastening member 102 so as to correspond to the cam member 87. The clearance part 107 enables interference between the fastening member 102 and the cam member 87 to be avoided. Therefore, regardless of the presence of the fastening member 102, the cam member 87 and the weight retaining plate 92 can be disposed in proximity to each other. In this way, the transmission 57 can be reduced in size in the axial direction of the crankshaft 32, that is, the vehicle width direction.

In the transmission 57 the sleeve 88 is fitted around the crankshaft 32. The sleeve 88 is in contact with the inner peripheral face of the movable sheave boss 74a. The groove 109 is formed in the outer peripheral face of the sleeve 88 over the entire periphery around the crankshaft 32. Grease can remain in the groove 109. Grease can spread over the entire periphery of the movable sheave boss 74a.

An embodiment of the present invention is explained above, but the present invention is not limited to the above embodiment and may be modified in a variety of ways as long as the modifications do not depart from the spirit and scope thereof.

For example, the electronically controlled V-belt continuously variable transmission of the present invention is not limited to one that is mounted on a scooter type two-wheeled motor vehicle, and may be used in a vehicle of any type. Furthermore, the first shift mechanism 75a of the present invention is not limited to the structure in which the weight retaining plate 92 is fitted onto the movable sheave boss 74a and the cam member 87 is disposed on the inside in the vehicle width direction so as to oppose the weight retaining plate 92; the cam member 87 may be fitted onto the movable sheave boss 74a, and the weight retaining plate 92 may be disposed on the inside in the vehicle width direction so as to oppose the cam member 87, thus making the weight retaining plate 92 and the cam member 87 be disposed the opposite way around.

## Claims

1. An electronically controlled V-belt continuously variable transmission comprising
a fixed sheave (73) that is fixed to a drive shaft (32),
a movable sheave (74) that has a movable sheave boss (74a) for receiving the drive shaft (32) and is supported on the drive shaft (32) so as to be capable of moving in an axial direction of the drive shaft (32) while facing the fixed sheave (73),
a V-belt (71) that is wound around between the fixed sheave (73) and the movable sheave (74),
a first shift mechanism (75a) that comprises a cam member (87) having a cam face (87a), that sandwiches a centrifugal weight (93) between the cam face (87a) and a weight retaining plate (92) disposed so as to oppose the cam member (87), and that drives the centrifugal weight (93) by means of centrifugal force accompanying rotation of the drive shaft (32) to thus move the movable sheave (74) in the axial direction,
a second shift mechanism (75b) that comprises a drive arm (111) relatively rotatably and axially non-movably fitted onto the movable sheave boss (74a) via a rolling bearing (112) and that transmits a driving force of an actuator (115) linked to the drive arm (111) to the movable sheave (74) to thus move the movable sheave (74) in the axial direction, and
a fastening member (102) that is disposed between the cam member (87) and the weight retaining plate (92), is joined to the movable sheave boss (74a), and retains the cam member (87) or the weight retaining plate (92) on the movable sheave boss (74a), and comprises on an inner peripheral surface thereof a screw part (103) that has a screw groove screwed onto the movable sheave (74a), **characterized in that** the fastening member (102) further comprises, on an inner peripheral face thereof, a press fitting part (104) that has an oil seal member (105) press fitted thereinto.

2. The electronically controlled V-belt continuously variable transmission according to Claim 1, wherein the cam member (87) has a housing recess part (106) that houses at least partially the fastening member (102) and the oil seal member (105).

3. The electronically controlled V-belt continuously variable transmission according to Claim 1 or 2, wherein a clearance part (107) is formed on the fastening member (102) so as to correspond to the cam member (87).

4. The electronically controlled V-belt continuously variable transmission according to any one of Claims 1 to 3, wherein a groove (109) is formed in at least one of an inner peripheral face of the movable sheave boss (74a) and an outer peripheral face of a member (88), that is in contact with the inner peripheral face, over the entire periphery around the drive shaft (32).

5. The electronically controlled V-belt continuously variable transmission according to any one of Claims 1 to 4, comprising an O ring (110) disposed between the fastening member (102) and the movable sheave boss (74a).

## Patentansprüche

1. Elektronisch gesteuertes, stufenlos verstellbares Keilriemen-Getriebe, umfassend eine fest angeordnete Scheibe (73), die an einer Antriebswelle (32) befestigt ist,
eine bewegbare Scheibe (74), die eine bewegbare Scheiben-Nabe (74a) zum Aufnehmen der Antriebswelle (32) hat und die von der Antriebswelle (32) getragen wird, sodass sie fähig ist, sich in einer axialen Richtung der Antriebswelle (32) zu bewegen, wobei sie der fest angeordneten Scheibe (73) gegenüberliegt,
einen Keilriemen (71), der zwischen der fest angeordneten Scheibe (73) und der bewegbaren Scheibe (74) und um diese herum gewunden ist,
einen ersten Schaltmechanismus (75a), der ein Nockenelement (87) umfasst, das eine Nockenfläche (87 A) hat, der ein Zentrifugengewicht (93) zwischen der Nockenfläche (87a) und einer Gewichts-Rückhalteplatte (92) einschließt, die so geordnet ist, dass sie dem Nockenelement (87) gegenüberliegt, und der das Zentrifugengewicht (93) mittels Zentrifugalkraft, die eine Drehung der Antriebswelle (32) begleitet, antreibt um demgemäß die bewegbare Scheibe (74) in der axialen Richtung zu bewegen,
einen zweiten Schaltmechanismus (75b), welcher einen Antriebsarm (111) umfasst, der relativ drehbar und axial nicht bewegbar an der bewegbaren Scheiben-Nabe (74a) mittels eines Rollenlagers (112) angebracht ist, und der eine Antriebskraft eines Aktuators (115), der mit dem Antriebsarm (111) verbunden ist, auf die bewegbare Scheibe (74) überträgt um demgemäß die bewegbare Scheibe (74) in der axialen Richtung zu bewegen, und
ein Befestigungselement (102), das zwischen dem Nockenelement (87) und der Gewichts-Rückhalteplatte (92) angeordnet ist, an die bewegbare Scheiben-Nabe (74a) angefügt ist, und das Nockenelement (87) oder die Gewichts-Rückhalteplatte (92) an der bewegbaren Scheiben-Nabe (74a) zurückhält und das an seiner inneren Umfangsfläche ein Schraubteil (103) umfasst, das eine Schraubennut hat, die auf die bewegbare Scheibe (74a) geschraubt ist,
**dadurch gekennzeichnet, dass** das Befestigungselement (102) weiterhin, an seiner inneren Umfangsfläche, ein Press-Passteil (104) umfasst, das ein Öl-Dichtungselement (105) hat, welches darin eingepresst ist.

2. Elektronisch gesteuertes, stufenlos verstellbares Keilriemen-Getriebe gemäß Anspruch 1, wobei das Nockenelement (87) ein ausgeschnittenes Aufnahmeteil (106) hat, welches wenigstens teilweise das Befestigungselement (102) und das Öl-Dichtungselement (105) aufnimmt.

3. Elektronisch gesteuertes, stufenlos verstellbares Keilriemen-Getriebe gemäß Anspruch 1 oder 2, wobei ein Abstandsteil (107) an dem Befestigungselement (102) gebildet ist, sodass es dem noch in Element (87) entspricht.

4. Elektronisch gesteuertes, stufenlos verstellbares Keilriemen-Getriebe gemäß irgendeinem der Ansprüche 1 bis 3, wobei eine Nut (109) in zumindest der inneren Umfangsfläche der bewegbaren Scheiben-Nabe (74a) oder einer äußeren Umfangsfläche eines Elements (88) gebildet ist, das über den gesamten Umfang um die Antriebswelle (32) in Kontakt mit der inneren Umfangsfläche ist.

5. Elektronisch gesteuertes, stufenlos verstellbares Keilriemen-Getriebe gemäß irgendeinem der Ansprüche 1 bis 4, umfassend einen O-Ring (110), der zwischen dem Befestigungselement (102) und der bewegbaren Scheiben-Nabe (74a) angeordnet ist.

## Revendications

1. Transmission à variation continue à courroie trapézoïdale à commande électronique comprenant :
une poulie fixe (73) qui est fixée à un arbre d'entraînement (32),
une poulie mobile (74) qui a un bossage de poulie mobile (74a) pour recevoir l'arbre d'entraînement (32) et est supportée sur l'arbre d'entraînement (32) de manière à être capable de se déplacer dans une direction axiale de l'arbre d'entraînement (32) tout en faisant face à la poulie fixe (73),
une courroie trapézoïdale (71) qui est enroulée entre la poulie fixe (73) et la poulie mobile (74),
un premier mécanisme de changement de vitesse (75a) qui comprend un élément de came (87) ayant une face de came (87a), qui intercale un contrepoids (93) entre la face de came (87a) et une plaque de retenue de poids (92) disposée de manière à s'opposer à l'élément de came (87), et qui entraîne le contrepoids (93) au moyen d'une force centrifuge accompagnant la rotation de l'arbre d'entraînement (32) pour déplacer ainsi la poulie mobile (74) dans la direction axiale,
un deuxième mécanisme de changement de vitesse (75b) qui comprend un bras d'entraînement (111) ajusté axialement non mobile et de manière relativement rotative sur le bossage de poulie mobile (74a) via un palier à roulement (112) et qui transmet une force d'entraînement d'un actionneur (115) lié au bras d'entraînement (111) à la poulie mobile (74) pour déplacer ainsi la poulie mobile (74) dans la direction axiale, et
un élément d'attache (102) qui est disposé entre l'élément de came (87) et la plaque de retenue de poids (92), est joint au bossage de poulie mobile (74a), et retient l'élément de came (87) ou la plaque de retenue de poids (92) sur le bossage de poulie mobile (74a), et comprend sur une surface périphérique interne de celui-ci une partie de vissage (103) qui a une rainure de vissage vissée sur la poulie mobile (74a),
**caractérisée en ce que** l'élément d'attache (102) comprend en outre, sur une face périphérique interne de celui-ci, une partie d'ajustement serré (104) qui a un élément d'étanchéité d'huile (105) ajusté de manière serrée dans celle-ci.

2. Transmission à variation continue à courroie trapézoïdale à commande électronique selon la revendication 1, dans laquelle l'élément de came (87) a une partie d'évidement formant logement (106) qui loge au moins partiellement l'élément d'attache (102) et l'élément d'étanchéité d'huile (105).

3. Transmission à variation continue à courroie trapézoïdale à commande électronique selon la revendication 1 ou 2, dans laquelle une partie de dégagement (107) est formée sur l'élément d'attache (102) de manière à correspondre à l'élément de came (87).

4. Transmission à variation continue à courroie trapézoïdale à commande électronique selon l'une quelconque des revendications 1 à 3, dans laquelle une rainure (109) est formée dans au moins l'une d'une face périphérique interne du bossage de poulie mobile (74a) et d'une face périphérique externe d'un élément (88), qui est en contact avec la face périphérique interne, sur toute la périphérie autour de l'arbre d'entraînement (32).

5. Transmission à variation continue à courroie trapézoïdale à commande électronique selon l'une quelconque des revendications 1 à 4, comprenant un joint torique (110) disposé entre l'élément d'attache (102) et le bossage de poulie mobile (74a).
